# EUROPEAN PATENT SPECIFICATION

(11) **EP 1 435 366 B1**
(45) Date of publication and mention of the grant of the patent: **13.08.2008**
(21) Application number: 03250046.4
(22) Date of filing: 03.01.2003
(51) Int. Cl.: C08G 18/54, C08J 9/08

(54) **Polyisocyanurate foam and process for its preparation**
Polyisocyanuratschaum und Verfahren zu seiner Herstellung
Mousse de polyisocyanurate et procédé de sa préparation

(43) Date of publication of application: 07.07.2004
(73) Proprietor: DOW GLOBAL TECHNOLOGIES INC., Midland, Michigan 48674 (US)
(72) Inventor: Pignagnoli, Francesca, Reggio Emilia (IT); Golini, Paolo, Turbigo (IT); Lancaster, Eileen M., Belper, Derbyshire DE56 1T1 (GB)
(74) Representative: Raynor, John

(56) References cited:
- US-A- 3 497 465
- US-A- 5 453 455
- US-A- 5 770 635

## Description

### FIELD OF THE INVENTION

The present invention relates to a polyisocyanurate foam, and to a process for the preparation of polyisocyanate-based foam.

### BACKGROUND OF THE INVENTION

Polyurethane and polyisocyanurate foam is being subjected to continuously changing and ever greater demands with respect to flame retardant and reduced smoke generation traits. It is also required that such foams are manufactured by processes that minimizes the use of blowing agents viewed as being harmful to the environment. Legislation has restricted the use of many substances traditionally used as physical blowing agent when preparing foam, and over the recent years there has been an emergence of alternative physical blowing agents including hydrocarbons, notably pentanes, and hydrofluoroalkanes such as for example tetrafluoroethane (R-134a) and pentafluoropropane (R-245fa).

There have also been many developments in the use of chemical blowing agents such as water and carbamates. Water is an attractive agent from the point of view of availability and economics. However, one of its disadvantages is the high consumption of isocyanate and high process temperatures associated with its use. Also in the case of polyisocyanurate foam, excessive amounts of water can be detrimental to foam properties leading to for example, high foam friability. An alternative to water is formic acid, which does not bring with it the same disadvantages. Formic acid reacts with isocyanate generating carbon monoxide and carbon dioxide gases that function as the blowing means.

The literature contains a number of publications that disclose the use of formic acid as blowing agent when preparing polyisocyanate-based foams such as polyurethane or polyisocyanurate foams.

US Patent 4,417,002 discloses the use of formic acid in combination with water as blowing agent for the manufacture of polyurethane foams.

US Patent 5,143,945 discloses the preparation of rigid polyurethane-polyisocyanurate foams in the presence of a blowing agent comprising a halocarbon in combination with an organic carboxylic acid, and optionally water. The carboxylic acid can be formic acid.

US Patent 5,286,758 discloses the use of formic acid and formate salts to prepare a low density rigid polyurethane under conditions of improved reactivity control.

US Patent 5,214,076 teaches the preparation of a carbodiimide-isocyanurate open celled foam from aromatic polyester polyols or aromatic amine polyols (ethoxylated TDA) in the presence of a blowing agent that can comprise formic acid.

US Patents 5,478,494 and 5,770,635 teach a polyol composition comprising a mixture of polyether polyols of differing equivalent weights and use of such composition in the presence of formic acid to prepare rigid polyurethane foams.

US Patent 5,762,822 teaches the manufacture of rigid polyurethane foam from a froth foaming mixture that employs as blowing agent a C 1-C4 hydrofluorocarbon having a boiling point of 300K or less in combination with at least 2 weight percent of formic acid or salts thereof. Similar teachings are also presented in US Patent 5,883,146.

US Patent 3497465 discloses polyurethanes that are useful in low temperature applications such as in refrigerators, refrigerated trucks and railcars. The polyurethanes are produced by reacting an organic polyisocyanate with a composition which comprises: (A) a phenolic polyol such as oxyalkylated phenol-aldehyde resin; (B) a polyol of an alcohol having 4 to 6 hydroxyl groups and 1,2-epoxide; (C) a dihydric alcohol; (D) an alkoanolamine; and (E) a phosphorus compound. Cellular products may be produced by incorporating a foaming agent such as formic acid in the reaction mixture. It does not however address the issue of improved flame retardant performance or a reduced potential for smoke generation when burnt.

Despite this apparently extensive knowledge relating to formic acid as blowing agent when manufacturing polyurethane or polyisocyanurate foam there is still a need to provide a foam that exhibits improved flame retardant performance or exhibits a reduced potential for smoke generation when burnt. Additionally for polyisocyanurate foam, the challenge is to combine above mentioned foam combustibility characteristics with convenient processing and generally acceptable foam mechanical properties.

### SUMMARY OF THE INVENTION

It has now been discovered that formic acid-blown polyisocyanate-based foam prepared in the presence of certain aromatic polyether polyols enables the production of foam with unexpected improvements in general physical performance including flame retardancy and smoke reduction.

The polyol composition suitable for use according to the invention comprises an aromatic polyoxyalkylene polyol based on an initiator obtained from the condensation of a phenol with an aldehyde.

In a second aspect, this invention is a multi component system suitable for the preparation of a rigid polyisocyanate-based foam which comprises as first component an aromatic polyisocyanate, and as second component the polyol composition as mentioned above.

The invention is a process for preparing a polyisocyanate-based foam which comprises bringing together under foam-forming conditions a polyisocyanate with the polyol composition as described above.

The invention provides a polyisocyanurate foam, obtained by bringing together under foam-forming conditions a polyisocyanate with a polyol composition characterized in that:
a) the polyisocyanate is present in an amount to provide for an isocyanate reaction index of from 150 to about 600 ; and
b) the blowing agent comprises (I) formic acid; and (C) the polyol composition comprises an aromatic polyoxyalkylene polyol based on an initiator obtained from the condensation of a phenol with an aldehyde.

In a further aspect, this invention is a process for preparing a closed-celled polyisocyanurate foam by bringing into contact under foam-forming conditions a polyisocyanate with a polyol composition in the presence of a blowing agent mixture wherein the polyol composition comprises an aromatic polyester polyol and an aromatic polyether polyol; and wherein the blowing agent mixture comprises formic acid and an additional blowing agent, which is a hydrofluoroalkane selected from the group consisting of tetrafluoroethane, pentafluoropropane, heptafluoropropane and pentafluorobutane, or a hydrocarbon selected from the group consisting of butane, pentane, cyclopentane, hexane, cyclohexane, and heptane, and the isomers thereof, and wherein the polyisocyanate is present in an amount to provide for an isocyanate reaction index of from greater than 150 to about 600.

In a seventh aspect, this invention is a laminate comprising the above-mentioned polyurethane or polyisocyanurate foam.

### DETAILED DESCRIPTION OF THE INVENTION

The rigid foams in accordance with this invention are prepared by bringing together under foam-forming conditions a polyisocyanate with a particular polyol composition comprising an aromatic polyol and a blowing agent comprising formic acid. The aromatic polyol is an aromatic polyether polyol or a combination thereof with an aromatic polyester polyol. The preferred aromatic polyether polyols are the aromatic polyoxyalkylene polyols based on an initiator derived from the condensation of a phenol with an aldehyde. In a preferred embodiment of this invention, the aromatic polyoxyalkylene polyol used is one obtained by reacting a condensate adduct of phenol and formaldehyde, with one or more alkylene oxides including ethylene oxide, propylene oxide, and butylene oxide. Such polyols, sometimes referred to as "Novolak" initiated polyols are known to one of skill in the art, and can be obtained by methods such as disclosed in, for example, US Patents Nos. 2,838,473; 2,938,884; 3,470,118; 3,686,101 and 4,046,721. Typically, "Novolak" starting materials are prepared by reacting a phenol (for example a cresol) with from about 0.8 to 1.5 moles of formaldehyde per mole of the phenol in the presence of an acidic catalyst to form a polynuclear condensation product containing from about 2.1 to 12, preferably from about 2.2 to 6, and more preferably from about 3 to about 5 phenol units/molecule. The novolak resin is then reacted with an alkylene oxide such as ethylene oxide, propylene oxide, butylene oxide, or isobutylene oxide, to form an oxyalkylated product containing a plurality of hydroxyl groups. For the purpose of the present invention, preferred "Novolak" polyols are those having an average of from about 3 to about 6 hydroxyl moieties per molecule and an average hydroxyl equivalent weight of from about 100 to about 500, preferably from about 100 to about 300. The "Novolak" initiated polyether polyol preferably constitutes from about 1, more preferably from about 10, more preferably from about 20, and yet more preferably from about 25; and up to about 99, preferably to about 70, more preferably up to about 60 parts by weight of the total weight of polyol composition.

The polyol composition comprises the formic acid in an amount to provide foam of the desired density. Typically the formic acid is present in an amount of from 0.5 to 8 parts, and more typically from about 1.5 to about 6 parts by weight per 100 parts by weight of the polyol composition including the formic acid. While formic acid is the carboxylic acid of preference, it is also contemplated that minor amounts of other aliphatic mono and polycarboxylic acids may also be employed, such as those disclosed in US Patent 5,143,945 column 3, lines - column 4, line 28, incorporated herein by reference, and including isobutyric acid, ethylbutyric acid, and ethylhexanoic acid.

In addition to the "Novolak" polyol and formic acid, the polyol composition may contain other polyether and polyester polyols along with additional blowing agents, (for example water), catalysts, surfactants, fillers and Flame Retardant additives as commonly used in the manufacture of polyisocyanate-based foams.

Examples of additional blowing agents which can be present include hydrochlorofluorocarbons, hydrofluorocarbons and hydrocarbons, as well as water. The additional blowing agent is preferably used in an amount of from 2 to 15 parts preferably from 4 to 10 parts, per 100 parts by weight of the polyol composition. Suitable hydrofluoroalkanes are the C₁-C₄ compounds including difluoromethane (R-32), 1,1,1,2-tetrafluoroethane (R-134a), 1,1-difluoroethane (R-152a), difluorochloroethane (R-142b), trifluoromethane (R-23), heptafluoropropane (R-227a), hexafluoropropane (R136), 1,1,1-trifluoroethane (R-133), fluoroethane (R-161), 1,1,1,2,2-pentafluoropropane (R-245fa), pentafluoropropylene (R2125a), 1,1,1,3-tetrafluoropropane, tetrafluoropropylene (R-2134a), 1,1,2,3,3-pentafluoropropane and 1,1,1,3,3-pentafluoro-n-butane. When a hydrofluorocarbon blowing agent is present, preferred is tetrafluoroethane (R-134a), pentafluoropropane (R-245fa) or pentafluorobutane (R-365). Suitable hydrocarbons for use as blowing agent include nonhalogenated hydrocarbons such as butane, isobutane, 2,3-dimethylbutane, n- and I-pentane isomers, hexane isomers, heptane isomers and cycloalkanes including cyclopentane, cyclohexane and cycloheptane. Preferred hydrocarbons for use as blowing agent include cyclopentane and notably n-pentane an iso-pentane. In a preferred embodiment of this invention the polyol composition comprises a physical blowing agent selected from the group consisting of tetrafluoroethane (R-134a), pentafluoropropane (R-245fa), pentafluorobutane (R-365), cyclopentane, n-pentane and iso-pentane. Water may also be present in the polyol composition added intentionally as a blowing agent. When intending to prepare polyurethane foam advantageously water is present in an amount of from about 0.5 to about 10 parts, and preferably from about 1 to about 6 parts, per 100 parts by weight of the polyol composition. When intending to prepare a polyisocyanurate foam, in order to obtain facilitate and give desirable processing characteristics, it is advantageous not to exceed 2 parts of water, and preferably not to exceed 1.5 parts of water; and even to have water absent.

Other polyols which may be present in the polyol composition include one or more other polyether or polyesters polyols of the kind typically employed in processes to make polyurethane foam. Other compounds having at least two isocyanate reactive hydrogen atoms may also be present, for example polythioether polyols, polyester amides and polyacetals containing hydroxyl groups, aliphatic polycarbonates containing hydroxyl groups, amine terminated polyoxyalkylene polyethers, and preferably, polyester polyols, polyoxyalkylene polyether polyols, and graft dispersion polyols. Mixtures of two or more of the aforesaid materials may also be employed.

The term "polyester polyol" as used in this specification and claims includes any minor amounts of unreacted polyol remaining after the preparation of the polyester polyol and/or unesterified polyol (e.g., glycol) added after the preparation of the polyester polyol. Suitable polyester polyols can be produced, for example, from organic dicarboxylic acids with 2 to 12 carbons, preferably aliphatic dicarboxylic acids with 4 to 6 carbons, and multivalent alcohols, preferably diols, with 2 to 12 carbons, preferably 2 to 6 carbons. Examples of dicarboxylic acids include succinic acid, glutaric acid, adipic acid, suberic acid, azelaic acid, sebacic acid, decanedicarboxylic acid, maleic acid, fumaric acid, phthalic acid, isophthalic acid, and terephthalic acid. The dicarboxylic acids can be used individually or in mixtures. Instead of the free dicarboxylic acids, the corresponding dicarboxylic acid derivatives may also be used such as dicarboxylic acid mono- or di- esters of alcohols with 1 to 4 carbons, or dicarboxylic acid anhydrides. Dicarboxylic acid mixtures of succinic acid, glutaric acid and adipic acid in quantity ratios of 20-35:35- 50:20- 32 parts by weight are preferred, especially adipic acid. Examples of divalent and multivalent alcohols, especially diols, include ethanediol, diethylene glycol, 1,2- and 1,3-propanediol, dipropylene glycol, 1,4- butanediol, 1,5-pentanediol, 1,6-hexanediol, 1,10-decanediol, glycerine and trimethylolpropanes, tripropylene glycol, tetraethylene glycol, tetrapropylene glycol, tetramethylene glycol, 1,4-cyclohexane- dimethanol, ethanediol, diethylene glycol, 1,4-butanediol, 1,5-pentanediol, 1,6- hexanediol, or mixtures of at least two of these diols are preferred, especially mixtures of 1,4-butanediol, 1,5-pentanediol, and 1,6- hexanediol. Furthermore, polyester polyols of lactones, e.g., . epsilon.- caprolactone or hydroxycarboxylic acids, e.g., .omega.- hydroxycaproic acid, may also be used. While the aromatic polyester polyols can be prepared from substantially pure reactant materials, more complex ingredients are advantageously used, such as the side stream, waste or scrap residues from the manufacture of phthalic acid, terephthalic acid, dimethyl terephthalate, polyethylene terephthalate, and the like. Other residues are DMT process residues, which are waste or scrap residues from the manufacture of dimethyl terephthalate (DMT). The present applicants have observed that for certain applications it is particularly advantageous for reasons of foam performance and processing to have present in the polyol composition both the "Novolak" polyol and an additional aromatic polyol which can be an aromatic polyether or aromatic polyester polyol.

Polyether polyols that additionally may be present include those which can be obtained by known methods, For example, polyether polyols can be produced by anionic polymerization with alkali hydroxides such as sodium hydroxide or potassium hydroxide or alkali alcoholates, such as sodium methylate, sodium ethylate, or potassium ethylate or potassium isopropylate as catalysts and with the addition of at least one initiator molecule containing 2 to 8, preferably 3 to 8, reactive hydrogens or by cationic polymerization with Lewis acids such as antimony pentachloride, boron trifluoride etherate, etc., or bleaching earth as catalysts from one or more alkylene oxides with 2 to 4 carbons in the alkylene radical. Any suitable alkylene oxide may be used such as 1,3-propylene oxide, 1,2- and 2,3-butylene oxide, amylene oxides, styrene oxide, and preferably ethylene oxide and 1,2-propylene oxide and mixtures of these oxides. The polyalkylene polyether polyols may be prepared from other starting materials such as tetrahydrofuran and alkylene oxide-tetrahydrofuran mixtures; epihalohydrins such as epichlorohydrin; as well as aralkylene oxides such as styrene oxide. The polyalkylene polyether polyols may have either primary or secondary hydroxyl groups, preferably secondary hydroxyl groups from the addition of propylene oxide onto an initiator because these groups are slower to react. Included among the polyether polyols are polyoxyethylene glycol, polyoxypropylene glycol, polyoxybutylene glycol, polytetramethylene glycol, block copolymers, for example, combinations of polyoxypropylene and polyoxyethylene glycols, poly-1,2-oxybutylene and polyoxyethylene glycols, poly-1,4-tetramethylene and polyoxyethylene glycols, and copolymer glycols prepared from blends or sequential addition of two or more alkylene oxides. The polyalkylene polyether polyols may be prepared by any known process such as, for example, the process disclosed by Wurtz in 1859 and Encyclopedia of Chemical Technology, Vol. 7, pp. 257- 262, published by Interscience Publishers, Inc. (1951) or in U.S. Pat. No. 1,922,459. Polyethers which are preferred include the alkylene oxide addition products of polyhydric alcohols such as ethylene glycol, propylene glycol, dipropylene glycol, trimethylene glycol, 1,2- butanediol, 1,5-pentanediol, 1,6-hexanediol, 1,7-heptanediol, hydroquinone, resorcinol glycerol, glycerine, 1,1,1-trimethylol-propane, 1,1,1-trimethylolethane, pentaerythritol, 1,2,6-hexanetriol, a- methyl glucoside, sucrose, and sorbitol. Also included within the term "polyhydric alcohol" are compounds derived from phenol such as 2,2- bis(4-hydroxyphenyl)-propane, commonly known as Bisphenol A. Particularly preferred in the polyol composition is at least one polyol which is initiated with a compound having at least two primary or secondary amine groups, a polyhydric alcohol having 4 or more hydroxyl groups, such as sucrose, or a mixture of initiators employing a polyhydric alcohol having at least 4 hydroxyl groups and compounds having at least two primary or secondary amine groups. Suitable organic amine initiators which may be condensed with alkylene oxides include aromatic amines such as aniline, N-alkylphenylene-diamines, 2,4'-, 2,2'-, and 4,4'-methylenedianiline, 2,6- or 2,4-toluenediamine, vicinal toluenediamines, o-chloro-aniline, p- aminoaniline, 1,5-diaminonaphthalene, methylene dianiline, the various condensation products of aniline and formaldehyde, and the isomeric diaminotoluenes; and aliphatic amines such as mono-, di-, and trialkanolamines, ethylene diamine, propylene diamine, diethylenetriamine, methylamine, triisopropanolamine, 1,3- diaminopropane, 1,3-diaminobutane, and 1,4-diaminobutane. Preferable amines include monoethanolamine, vicinal toluenediamines, ethylenediamines, and propylenediamine. Yet another class of aromatic polyether polyols contemplated for use in this invention are the Mannich-based polyol an alkylene oxide adduct of phenol/formaldehyde/alkanolamine resin, frequently called a "Mannich" polyol such as disclosed in U.S. Patents 4,883,826; 4,939,182; and 5,120,815.

When the blowing agent composition includes physical blowing agents such as, for example, HFC245fa, HFC134a or HFC365mfc, the combination of an aromatic polyester polyol and an aromatic polyether polyols is particularly preferred in order to achieve desirable flame retardant and smoke suppressant characteristics together with attractive storage stability of the polyol composition and convenient foam processing.

In the practice of the present invention, the applicants have observed that for the purpose of enhancing foam integrity and improving surface adhesion it is advantageous to incorporated small amounts of high equivalent weight polyether polyols such as are typically used in molded flexible polyurethanes, for example, VORANOL 1421 available from The Dow Chemical Company and understood to be a glycerine-initiated polyoxypropylene-oxyethylene polyol having a molecular weight of approximately 5100 and an oxyethylene content of approximately 70 percent.

In addition to the foregoing components, it is often desirable to have certain other ingredients present in the polyol composition for the purpose of facilitating the subsequent use in preparing cellular polymers. Among these additional ingredients are catalysts, surfactants, preservatives, colorants, antioxidants, flame retardants, reinforcing agents, stabilizers and fillers. In making polyurethane foam, it is generally highly preferred to employ a minor amount of a surfactant to stabilize the foaming reaction mixture until it cures. Such surfactants advantageously comprise a liquid or solid organosilicone surfactant. Other, less preferred surfactants include polyethylene glycol ethers of long-chain alcohols, tertiary amine or alkanolamine salts of long-chain alkyl acid sulfate esters, alkyl sulfonic esters and alkyl arylsulfonic acids. Such surfactants are employed in amounts sufficient to stabilize the foaming reaction mixture against collapse and the formation of large, uneven cells. Typically, 0.2 to 3 parts of the surfactant per 100 parts by weight polyol composition are sufficient for this purpose.

Such Flame retardants advantageously present include for example exfoliating graphite, phosphonate esters, phosphate esters, halogenated phosphate esters or a combination thereof. Phosphonate esters for use in the present invention can be represented by the formula R-P(O)(OR')(OR") where R, Rand R" are each independently an alkyl having 1 to 4 carbon atoms. Preferred members of this group are dimethyl methylphosphonate (DMMP) and diethyl ethyl phosphonate (DEEP). Phosphate esters which can be used in the present invention are trialkyl phosphates, such as triethyl phosphate, and tricresyl phosphate. When used, the phosphonate or phosphate ester flame retardants are present in the final foam at a level of from 0.5 to 20 percent by weight of the final foam. Preferably they are 1 to 15 percent by weight of the final foam. More preferably they constitute 2 to 10 percent by weight of the final foam. Halogenated phosphate esters which are associated with fire retardation are known in the art and can be represented by the general formula P(O)(OR'X'n)(OR''X''n)(OR'''X'''n), where R', R" and R''' are each independently an alkyl having 1 to 4 carbon atoms, X', X" and X"'. are each independently a halogen and n is an integer from 1 to 3. Examples of halogenated phosphate esters include 2-chloroethanol phosphate; 1 -chloro-2-propanol phosphate [tris(1-chloro-2-propyl) phosphate] (TCPP); 1,3-dichloro-2-propanol Phosphate also called tris(1,3- dichloro-2-propyl) phosphate; tri(2-chloroethyl) phosphate; tri (2,2- dichloroisopropyl) phosphate; tri (2,3-dibromopropyl) phosphate; tri (11, 3-dichloropropyl)phosphate; tetrakis(2-chloroethyl) ethylene diphosphate; bis(2-chloroethyl) 2- chloroethylphosphonate; cliphosphates [2-chloroethyl diphosphate]; tetrakis (2-chloroethyl) ethylenediphosphate; tris- (2-chloroethyl)-phosphate, tris-(2-chloropropyl)phosphate, tris-(2,3- dibromopropyl)- phosphate, tris(1,3-dichloropropyl)phosphate tetrakis (2-chloroethyl- ethylene diphosphate and tetrakis(2-chloroethyl) ethyleneoxyethylenediphosphate. Tribromonopentyl chloroalkyl phosphates as disclosed in EP 0 735 039 having the formula [(BrCH₂)₃C-CH₂O]ₙPO (OCYHCH₂Cl)₃ -where Y represents a hydrogen, an alkyl having 1 to 3 carbon atoms, or chloroalkyl group and n is from 0. 95 to 1.15 may also be used.

One or more catalysts for the reaction of the polyol (and water, if present) with the polyisocyanate are advantageously used. Any suitable urethane catalyst may be used, including tertiary amine compounds and organometallic compounds. Exemplary tertiary amine compounds include triethylenediamine, N-methylmorpholine, N,N-dimethylcyclohexylamine, pentamethyldiethylenetriamine, tetramethylethylenediamine, 1-methyl-4-dimethylaminoethylpiperazine, 3-methoxy-N-dimethylpropylamine, N-ethylmorpholine, diethylethanolamine, N-cocomorpholine, N,N-dimethyl- N',N'-dimethyl isopropylpropylenediamine, N,N-diethyl-3-diethylaminopropylamine and dimethylbenzylamine. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-laurate, as well as other organometallic compounds such as are disclosed in U.S. Patent 2,846,408. A catalyst for the trimerization of polyisocyanates, resulting in a polyisocyanurate, such as an alkali metal alkoxide may also optionally be employed herein. Such catalysts are used in an amount which measurably increases the rate of polyurethane or polyisocyanurate formation. Typical amounts are 0.001 to 3 parts of catalyst per 100 parts by weight of total polyol.

A polyisocyanurate-based foam is obtained by bringing together the above described polyol composition under foaming forming conditions with a polyisocyanate. In this manner polyurethane or polyisocyanurate foam can be prepared. Polyisocyanates useful in making the foam include aliphatic and cycloaliphatic and preferably aromatic polyisocyanates or combinations thereof, advantageously having an average of from 2 to 3.5, and preferably from 2.4 to 3.2 isocyanate groups per molecule. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. The preferred polyisocyanates are aromatic polyisocyanates such as disclosed in U.S. Patent 3,215,652. Especially preferred are methylene-bridged polyphenyl polyisocyanates and mixtures thereof with crude diphenylmethane diisocyanate, due to their ability to cross-link the polyurethane.

The polyisocyanate is present in an amount to provide an isocyanate reaction index of from about 150 to about 600, preferably from about 200 to about 500. The polyol composition of this invention is particularly useful in the preparation of polyisocyanurate foam.

In general, the rigid foams may be produced by discontinuous or continuous processes, including the process referred to generally as the discontinuous panel process (DCP) and continuous lamination, with the foaming reaction and subsequent curing being carried out in molds or on conveyors. When utilizing the foams in laminates, the facing may be flexible, for example, aluminum foil or coated paper, or may be a rigid material such as plaster-board, polyester facing or steel facing. Other processes to prepare construction foams are known as spray and block foams.

The rigid foam of the present invention are for the most part closed-cell foam. By closed-cells it is meant that at least 75 percent, preferably 80 percent or greater, and more preferably 85 percent or more of the cells are closed. In a preferred embodiment, 90 percent or more of the cells are closed. Because of the closed-cell structures, the rigid polyurethanes of the present invention are useful for thermal insulation applications such as roofing, sheathing and in-situ spray applications.

The following examples are given to illustrate the invention and should not be interpreted as limiting it in any way. Unless stated otherwise, all parts and percentages are by weight. The following abbreviations identify various materials used in the Examples.
Polyol A: A "Novolak" polyol being a oxypropylene-oxyalkylene adduct based on a phenol-formaldehyde condensate having an average functionality of about 3.3. Polyol hydroxyl number is 196
Polyol B A polyester polyol, TEROL 198 available from Oxid understood to have a hydroxyl number 198.
Polyol CA glycerine-initiated oxypropylene-oxyethylene polyol, VORANOL 1421, available from The Dow Chemical Company. Hydroxyl Number 35.
Polyol DA sucrose initiated oxypropylene-oxyethylene polyol, VORANOL 280, available from The Dow Chemical Company . Hydroxyl Number 280

- DEEP: Diethyl ethylphosphonate
- TCPP: Trichloroisopropylphosphate
- MEG: ethylene glycol
- DABCO DC5598: Surfactant, available from Air Products
- DABCO TMR: Catalyst, available from Air Products
- DABCO K15: Catalyst, available from Air Products
- PMDETA: pentamethyldiethylenetriamine
- DMCHA: dimethylcyclohexylamine
- Toyocat DM70: Catalyst ,available from Tosoh
- Curithane 206: Catalyst available from The Dow Chemical Company
- Formic Acid: Purity 98 % , supplied by Incofar
- n-pentane: commercial grade as provided by Synthesis
- ISO A: VORANATE 600, A higher functionality crude diphenylmethane diisocyanate available from The Dow Chemical Company
- ISO B: VORANATE 220, A standard grade crude diphenylmethane diisocyanate available from The Dow Chemical Company

### Foam Examples 1-9

Foams 1 to 9 (2, 4 , 7 and 9 are comparative Foams) are prepared using a Cannon A40 high pressure machine. Reactants and amounts are indicated in the following table. Foams 1 - 4 have been evaluated in the production of metal-faced continuous laminate panels. Foams 5 to 9 have been evaluated in the production of discontinuous panels. Foams prepared in the presence of formic acid exhibit a notably stronger flame retardant and smoke suppressant characteristics than those foams prepared in the absence of the acid. Foams prepared in the presence of formic acid and pentane, provided both surprisingly good flame retardant and reduced smoke generation traits; such performance in the presence of pentane had not been expected giving consideration to the normal flammable properties of pentane.

Comparative example Foam 9 show that use of a polyol composition comprising uniquely an aromatic polyester polyol is unattractive with observation of poor skin curing, resulting in more difficult processing.

A further observation is that this invention provides for polyol compositions of attractive storage stability where such compositions includes as blowing agent, HFC245fa (Foam 8).

### Foam Example 10

A polyisocyanurate foam is prepared in a manner similar to Foams 1-9 with reactants as noted below. In this instance the polyol composition is a combination of an aromatic polyester polyol and an aromatic polyether polyol with good blend stability in the presence of the blowing agent, pentafluoropropane (245fa).

| | |
|---|---|
| 47 pbw | TERATE 4026 , a polyester polyol from Kosa, OH value 205 |
| 7 | Polyol C |
| 10 | TERACOL 5902, a TDA initiated, oxypropylene - oxyethylene polyol available from The Dow Chemical Company, OH value 375 |
| 5 | DEEP |
| 9 | TCPP |
| 6 | TEP surfactant |
| 1.6 | Surfactant |
| 0.3 | DMCHA |
| 2.2 | CURITHANE 206 |
| 0.3 | water |
| 2.6 | formic acid |
| 9.1 | Hfc 245fa |
| | |
| Iso A (Index) | 170 pbw /(300) |
| | |
| Reactivity (CT/GT) | 4/44 |
| Free rise density (kg/m3) | 38.3 |

The foam is observed to have a Butler chimney flame spread of 15.5 cm; a weight retention of 93.4%; and a smoke development (NBS) of 59. Processing characteristics of the foam are attractive with a 100% skin cure being noted in about 7 minutes at a mold temperature of 45C.

| Pbw | Foam 1 | Foam 2* | Foam 3 | Foam 4* | Foam 5 | Foam 6 | Foam 7* | Foam 8 | Foam 9* |
|---|---|---|---|---|---|---|---|---|---|
| Polyol A | 30.1 | 30 | 31 | 31 | 52.3 | 45.4 | 51 | 24.8 | |
| Polyol B | 25 | 25 | 30.5 | 30.5 | / | / | / | 24.7 | 47.6q(*) |
| Polyol C | 11.5 | 11.5 | / | / | / | / | / | | |
| Polyol D | / | / | 9.1 | 9.1 | / | / | / | | |
| DEEP | 11.5 | 11.4 | 9.8 | 9.8 | 8 | 12.9 | 11 | 8 | 12.89 |
| TCPP | 14 | 14 | 9.8 | 9.8 | 30 | 31.7 | 31.9 | 30 | 30.25 |
| MEG | / | / | 0.5 | 0.5 | / | / | / | | |
| L6900 | / | / | / | / | / | 1.98 | 1.5 | | |
| DABCO DC5598 | 1.8 | 1.8 | 2.95 | 2.95 | 3 | / | / | 3 | 3 |
| DMCHA | 0.47 | 0.4 | | | 0.2 | / | / | 0.05 | |
| DMEE | / | / | / | / | / | 0.2 | / | | |
| Toyocat DM70 | 0.2 | | | | | | | | |
| PMDETA | / | 0.07 | 0.1 | 0.1 | / | / | / | | |
| CURITHANE 52 | / | / | 4.92 | 4.92 | / | 3.03 | / | | |
| Dabco K15 | 0.33 | | | | | | | | |
| CURITHANE 206 | 1.74 | 2.2 | / | / | 1.5 | / | 0.7 | 1.45 | 1.5 |
| DABCO TMR | / | / | 1.0 | 1.0 | / | / | / | | |
| Water | 1.91 | 3.15 | / | 1.2 | / | 1.98 | 3.12 | | 1.98 |
| Formic Acid | 1.45 | / | 1.6 | / | 4.99 | 2.78 | / | 4 | 2.78 |
| HFC 245fa | | | | | | | | 4 | |
| n-Pentane | / | / | 9 | 9 | / | / | / | | |
| ISO A (Index) | 188.5 (300) | 231 (300) | 180 (340) | 180 (320) | / | / | | | |
| ISO B | / | / | / | / | 160 (293) | 168 (240) | 180 (247) | 143 (290) | 179 (240) |
| | | | | | | | | | |
| Polyol blend stability | Clear ,stable | Clear ,stable | / | | Clear ,stable | Clear ,stable | Clear ,stable | Clear ,stable | |
| Reactivity CT/GT (secs) | 5/42 | 5/26 | 6/41 | | 6/95 | 12 / 100 | 13/88 | 6/83 | 20/105 |
| Free-Rise Core density (kg/m³) | 44.9 | 43.3 | 38.9 | | 34 | 31 | 35 | 32.4 | 35 |
| DIN 4102 B2 rating (cm) | 5 | / | 6.5 | 9.2 | 6 | 9 | 12.5 | 6.4 | 7.8 |
| Butler Chimney test | | | | | | | | | |
| Flame spread | 15.9 cm | 20 cm | / | | | | | | |
| Weight retention | 92.6 % | 91.5 | 89.8 | 87 | | | | | |
| Smoke development (NBS) | 137 | 176 | 66 | 86 | | | | | |
| % skin cure (45-50C mold temp) | >70% at 7min | 25 % at 7 min | 100% at 5 min | 25% at 5 min | 100% 12 min | 100% 12 min | 70% (soft foam) 12' | 100% 12 min | 50% (soft foam) 12' |
| (*) Terate 2540, polyester polyol from Kosa , hydroxyl number 250 | | | | | | | | | |

## Claims

1. A polyisocyanurate foam obtained by bringing together under foam-forming conditions a polyisocyanate with a polyol composition and a blowing agent, **characterized in that**:
a) the polyisocyanate is present in an amount to provide for an isocyanate reaction index of from 150 to 600; and
b) the blowing agent comprises formic acid; and
c) the polyol composition comprises an aromatic polyoxyalkylene polyol based on an initiator obtained from the condensation of a phenol with an aldehyde.

2. The foam of Claim 1, wherein said formic acid is present in an amount of from 0.5 to 8 parts by weight per 100 parts by weight, based on the combined amount of the said polyol composition and the formic acid.

3. The foam of Claim 1, wherein the blowing agent also comprises a physical blowing agent.

4. The foam of Claim 3, wherein the physical blowing agent is a hydrocarbon selected from butane, pentane, cyclopentane, hexane, cyclohexane, and heptane, and the isomers thereof.

5. The foam of Claim 3, wherein the physical blowing agent is a C₁-C₄ hydrofluoroalkane or hydrochlorofluoroalkane.

6. The foam of Claim 5, wherein the physical blowing agent is a hydrofluoroalkane selected from difluoromethane, difluoroethane, tetrafluoroethane, pentafluoropropane and hexafluorobutane.

7. The foam of Claim 1, wherein the aromatic polyoxyalkylene polyol is based on an initiator obtained from the condensation of phenol with formaldehyde.

8. The foam of Claim 1, wherein the aromatic polyoxyalkylene polyol is present in an amount of at least 20 weight percent based on total weight of the polyol composition.

9. The foam of Claim 1 wherein the polyol composition further comprises an aromatic polyester polyol.

10. The foam of Claim 1 wherein the foam is produced in the presence of water, in an amount of from 0 to 2 parts by weight per 100 parts of the combined weight of the polyol composition and blowing agent.

11. The foam of Claim 1 wherein polyol composition also comprises a toluenediainine-initiated polyol, a Mannich base-initiated polyol, a methylene diphenylamine-initiated polyol, a phenol-acetone condensate-initiated polyol or a phenol-formaldehyde condensate-initiated polyol.

12. A process for preparing a polyisocyanurate-based foam which comprises bringing together under foam-forming conditions a polyisocyanate with a polyol composition and a blowing agent, **characterized in that**:
a) the polyisocyanate is present in an mount to provide for an isocyanate reaction index of from 150 to 600; and
b) the blowing agent comprises formic acid; and
c) the polyol composition comprises an aromatic polyoxyalkylene polyol based on an initiator obtained from the condensation of a phenol with an aldehyde.

13. A process according to Claim 12, wherein said formic acid is present in the polyol composition, and comprises from 0.5 to 8 parts by weight per 100 parts by weight, based on the combined amount of the said polyol composition and the formic acid.

14. A process according to Claim 12, wherein the blowing agent also comprises a physical blowing agent.

15. A process according to Claim 14, wherein the physical blowing agent is a hydrocarbon selected from butane, pentane, cyclopentane, hexane, cyclohexane, and heptane, and the isomers thereof.

16. A process according to Claim 14, wherein the physical blowing agent is a C₁-C₄ hydrofluoroalkane or hydrochlorofluoroalkane.

17. A process according to Claim 16, wherein the physical blowing agent is a hydrofluoroalkane selected from difluoromethane, difluoroethane, tetrafluoroethane, pentafluoropropane and hexafluorobutane.

18. A process according to Claim 12, wherein the aromatic polyoxyalkylene polyol is based on an initiator obtained from the condensation of phenol with formaldehyde.

19. A process according to Claim 12, wherein the aromatic polyoxyalkylene polyol is present in an amount of at least 20 weight percent based on total weight of the polyol composition.

20. A process according to Claim 12 wherein the polyol composition further comprises an aromatic polyester polyol.

21. A process according to Claim 12 wherein the foam is produced in the presence of water, in an amount of from 0 to 2 parts by weight per 100 parts of the combined weight of the polyol composition and blowing agent.

22. A process according to Claim 12 wherein the polyol composition also comprises a toluenediamine-initiated polyol, a Mannich base-initiated polyol, a methylene diphenylamine-initiated polyol, a phenol-acetone condensate-initiated polyol or a phenol-formaldehyde condensate-initiated polyol.

23. A process according to claim 12,
wherein the blowing agent comprises formic acid and a hydrocarbon selected from butane, pentane, cyclopentane, hexane, cyclohexane, and heptane, and the isomers thereof.

24. A laminate comprising the polyisocyanurate foam of any one of Claims 1 to 11.

## Patentansprüche

1. Polyisocyanuratschaum, erhältlich, indem ein Polyisocyanat mit einer Polyolzusammensetzung und einem Treibmittel unter schaumbildenden Bedingungen zusammengebracht wird, **dadurch gekennzeichnet, dass**:
a) das Polyisocyanat in einer Menge vorhanden ist, die für einen Reaktionsindex des Isocyanats von 150 bis 600 sorgt und
b) das Treibmittel Ameisensäure enthält und
c) die Polyolzusammensetzung ein aromatisches Polyoxyalkylenpolyol umfasst, das auf einem Initiator basiert, der durch die Kondensation eines Phenols mit einem Aldehyd erhältlich ist.

2. Schaum nach Anspruch 1, wobei die Ameisensäure in einer Menge von 0,5 bis 8 Gewichtsteilen pro 100 Gewichtsteile, basierend auf der kombinierten Menge der Polyolzusammensetzung und der Ameisensäure, vorhanden ist.

3. Schaum nach Anspruch 1, wobei das Treibmittel auch ein physikalisches Treibmittel umfasst.

4. Schaum nach Anspruch 3, wobei das physikalische Treibmittel ein Kohlenwasserstoff ausgewählt aus Butan, Pentan, Cyclopentan, Hexan, Cyclohexan und Heptan und den Isomeren davon ist.

5. Schaum nach Anspruch 3, wobei das physikalische Treibmittel ein C₁-C₄-Hydrofluoralkan oder -Hydrochlorfluoralkan ist.

6. Schaum nach Anspruch 5, wobei das physikalische Treibmittel ein Hydrofluoralkan ausgewählt aus Difluormethan, Difluorethan, Tetrafluorethan, Pentafluorpropan und Hexafluorbutan ist.

7. Schaum nach Anspruch 1, wobei das aromatische Polyoxyalkylenpolyol auf einem Initiator basiert, der durch die Kondensation von Phenol mit Formaldehyd erhältlich ist.

8. Schaum nach Anspruch 1, wobei das aromatische Polyoxyalkylenpolyol in einer Menge von mindestens 20 Gewichtsprozent, basierend auf dem Gesamtgewicht der Polyolzusammensetzung ist.

9. Schaum nach Anspruch 1, wobei die Polyolzusammensetzung ferner ein aromatisches Polyesterpolyol enthält.

10. Schaum nach Anspruch 1, wobei der Schaum in der Gegenwart von Wasser in einer Menge von 0 bis 2 Gewichtsteilen pro 100 Gewichtsteile des kombinierten Gewichts der Polyolzusammensetzung und des Treibmittels, hergestellt wird.

11. Schaum nach Anspruch 1, wobei die Polyolzusammensetzung auch ein Toluoldiamin-initiiertes Polyol, ein Mannich-Base-initiiertes Polyol, ein Methylen-Diphenylamin-initliertes Polyol, ein Phenol-Aceton-Kondensat-initiiertes Polyol oder ein Phenol-Formaldehyd-Kondensat-initiiertes Polyol enthält.

12. Verfahren zur Herstellung eines Schaums auf Polyisocyanuratbasis, das es umfasst, ein Polyisocyanat mit einer Polyolzusammensetzung und einem Treibmittel unter schaumbildenden Bedingungen zusammen zu bringen, **dadurch gekennzeichnet, dass**:
a) das Polyisocyanat in einer Menge vorhanden ist, die für einen Reaktionsindex des Isocyanats von 150 bis 600 sorgt und
b) das Treibmittel Ameisensäure enthält und
c) die Polyolzusammensetzung ein aromatisches Polyoxyalkylenpolyol umfasst, das auf einem Initiator basiert, der durch die Kondensation eines Phenols mit einem Aldehyd erhältlich ist.

13. Verfahren nach Anspruch 12, wobei die Ameisensäure in der Polyolzusammensetzung vorhanden ist und 0,5 bis 8 Gewichtsteile pro 100 Gewichtsteile umfasst, basierend auf der kombinierten Menge der Polyolzusammensetzung und der Ameisensäure.

14. Verfahren nach Anspruch 12, wobei das Treibmittel auch ein physikalisches Treibmittel umfasst.

15. Verfahren nach Anspruch 14, wobei das physikalische Treibmittel ein Kohlenwasserstoff ausgewählt aus Butan, Pentan, Cyclopentan, Hexan, Cyclohexan und Heptan und den Isomeren davon ist.

16. Verfahren nach Anspruch 14, wobei das physikalische Treibmittel ein C₁-C₄-Hydrofluoralkan oder -Hydrochlorfluoralkan ist.

17. Verfahren nach Anspruch 16, wobei wobei das physikalische Treibmittel ein Hydrofluoralkan ausgewählt aus Difluormethan, Difluorethan, Tetrafluorethan, Pentafluorpropan und Hexafluorbutan ist.

18. Verfahren nach Anspruch 12, wobei das aromatische Polyoxyalkylenpolyol auf einem Initiator basiert, der durch die Kondensation von Phenol mit Formaldehyd erhältlich ist.

19. Verfahren nach Anspruch 12, wobei wobei das aromatische Polyoxyalkylenpolyol in einer Menge von mindestens 20 Gewichtsprozent, basierend auf dem Gesamtgewicht der Polyolzusammensetzung ist.

20. Verfahren nach Anspruch 12, wobei die Polyolzusammensetzung ferner ein aromatisches Polyesterpolyol enthält.

21. Verfahren nach Anspruch 12, wobei der Schaum in der Gegenwart von Wasser, in einer Menge von 0 bis 2 Gewichtsteilen pro 100 Gewichtsteile, des kombinierten Gewichts der Polyolzusammensetzung und des Treibmittels, hergestellt wird.

22. Verfahren nach Anspruch 12, wobei die Polyolzusammensetzung auch ein Toluoldiamin-initiiertes Polyol, ein Mannich-Base-initiiertes Polyol, ein Methylen-Diphenylamin-initiiertes Polyol, ein Phenol-Aceton-Kondensat-initiiertes Polyol oder ein Phenol-Formaldehyd-Kondensat-initiiertes Polyol enthält.

23. Verfahren nach Anspruch 12, wobei die Treibmittel Ameisensäure und einen Kohlenwasserstoff ausgewählt aus Butan, Pentan, Cyclopentan, Hexan, Cyclohexan und Heptan und den Isomeren davon umfasst.

24. Laminat umfassend den Polyisocyanuratschaum nach einem der Ansprüche 1 bis 11.

## Revendications

1. Mousse de polyisocyanurate, obtenue par mise en présence, dans des conditions appropriées pour la formation d'une mousse, d'un polyisocyanate, d'une composition de polyols et d'un agent d'expansion, **caractérisée en ce que** :
a) le polyisocyanate se trouve présent en une quantité qui donne un indice de réaction d'isocyanate de 150 à 600 ;
b) l'agent d'expansion comprend de l'acide formique ;
c) et la composition de polyols comprend un polyol aromatique polyalcoxylé, produit à partir d'un amorceur obtenu par condensation d'un phénol et d'un aldéhyde.

2. Mousse conforme à la revendication 1, pour laquelle l'acide formique se trouve présent en une quantité de 0,5 à 8 parties en poids pour 100 parties en poids, au total, de ladite composition de polyols et d'acide formique.

3. Mousse conforme à la revendication 1, pour laquelle l'agent d'expansion comprend aussi un agent d'expansion physique.

4. Mousse conforme à la revendication 3, pour laquelle l'agent d'expansion physique est un hydrocarbure choisi parmi les butane, pentane, cyclopentane, hexane, cyclohexane, heptane et leurs isomères.

5. Mousse conforme à la revendication 3, pour laquelle l'agent d'expansion physique est un hydrofluoroalcane ou un hydrochlorofluoroalcane en C₁₋₄.

6. Mousse conforme à la revendication 5, pour laquelle l'agent d'expansion physique est un hydrofluoroalcane choisi parmi les difluorométhane, difluoroéthane, tétrafluoroéthane, pentafluoropropane et hexafluorobutane.

7. Mousse conforme à la revendication 1, pour laquelle le polyol aromatique polyalcoxylé a été produit à partir d'un amorceur obtenu par condensation de phénol et de formaldéhyde.

8. Mousse conforme à la revendication 1, pour laquelle le polyol aromatique polyalcoxylé se trouve présent en une quantité qui représente au moins 20 % du poids total de la composition de polyols.

9. Mousse conforme à la revendication 1, pour laquelle la composition de polyols comprend en outre un polyester-polyol aromatique.

10. Mousse conforme à la revendication 1, laquelle mousse a été produite en présence d'eau, employée en une quantité de 0 à 2 parties en poids pour 100 parties en poids, au total, de ladite composition de polyols et d'agent d'expansion.

11. Mousse conforme à la revendication 1, pour laquelle la composition de polyols comprend en outre un polyol obtenu à partir d'un amorceur de type toluène-diamine, un polyol obtenu à partir d'un amorceur de type base de Mannich, un polyol obtenu à partir d'un amorceur de type méthylène-diphénylamine, un polyol obtenu à partir d'un amorceur qui est un produit de condensation de phénol et d'acétone, ou un polyol obtenu à partir d'un amorceur qui est un produit de condensation de phénol et de formaldéhyde.

12. Procédé de préparation d'une mousse de polyisocyanurate, comportant le fait de mettre en présence, dans des conditions appropriées pour la formation d'une mousse, un polyisocyanate, une composition de polyols et un agent d'expansion, et **caractérisé en ce que** :
a) le polyisocyanate se trouve présent en une quantité qui donne un indice de réaction d'isocyanate de 150 à 600 ;
b) l'agent d'expansion comprend de l'acide formique ;
c) et la composition de polyols comprend un polyol aromatique polyalcoxylé, produit à partir d'un amorceur obtenu par condensation d'un phénol et d'un aldéhyde.

13. Procédé conforme à la revendication 12, dans lequel ledit acide formique se trouve présent dans la composition de polyols, en une quantité de 0,5 à 8 parties en poids pour 100 parties en poids, au total, de ladite composition de polyols et d'acide formique.

14. Procédé conforme à la revendication 12, dans lequel l'agent d'expansion comprend aussi un agent d'expansion physique.

15. Procédé conforme à la revendication 14, pour lequel l'agent d'expansion physique est un hydrocarbure choisi parmi les butane, pentane, cyclopentane, hexane, cyclohexane, heptane et leurs isomères.

16. Procédé conforme à la revendication 14, dans lequel l'agent d'expansion physique est un hydrofluoroalcane ou un hydrochlorofluoroalcane en C₁₋₄.

17. Procédé conforme à la revendication 16, dans lequel l'agent d'expansion physique est un hydrofluoroalcane choisi parmi les difluorométhane, difluoroéthane, tétrafluoroéthane, pentafluoropropane et hexafluorobutane.

18. Procédé conforme à la revendication 12, pour lequel le polyol aromatique polyalcoxylé a été produit à partir d'un amorceur obtenu par condensation de phénol et de formaldéhyde.

19. Procédé conforme à la revendication 12, pour lequel le polyol aromatique polyalcoxylé se trouve présent en une quantité qui représente au moins 20 % du poids total de la composition de polyols.

20. Procédé conforme à la revendication 12, dans lequel la composition de polyols comprend en outre un polyester-polyol aromatique.

21. Procédé conforme à la revendication 12, dans lequel la mousse est produite en présence d'eau, employée en une quantité de 0 à 2 parties en poids pour 100 parties en poids, au total, de ladite composition de polyols et d'agent d'expansion.

22. Procédé conforme à la revendication 12, dans lequel la composition de polyols comprend en outre un polyol obtenu à partir d'un amorceur de type toluène-diamine, un polyol obtenu à partir d'un amorceur de type base de Mannich, un polyol obtenu à partir d'un amorceur de type méthylène-diphénylamine, un polyol obtenu à partir d'un amorceur qui est un produit de condensation de phénol et d'acétone, ou un polyol obtenu à partir d'un amorceur qui est un produit de condensation de phénol et de formaldéhyde.

23. Procédé conforme à la revendication 12, dans lequel l'agent d'expansion comprend de l'acide formique et un hydrocarbure choisi parmi les butane, pentane, cyclopentane, hexane, cyclohexane, heptane et leurs isomères.

24. Stratifié comprenant une mousse de polyisocyanurate conforme à l'une des revendications 1 à 11.
